# EUROPEAN PATENT APPLICATION

(11) **EP 4 683 286 A1**
(43) Date of publication of application: **21.01.2026**
(21) Application number: 24205540.8
(22) Date of filing: 09.10.2024
(51) Int. Cl.: H04L 41/082, H04L 41/084, H04L 41/0853

(54) **NETWORK MANAGEMENT METHOD AND NETWORK MANAGEMENT DEVICE**

(30) Priority: 15.07.2024 TW 113126430
(71) Applicant: Moxa Inc., New Taipei City 242 (TW)
(72) Inventor: Huang, Tzu-Lun, 242 New Taipei City (TW); Chen, Hsiang-Ju, 242 New Taipei City (TW)
(74) Representative: Straus, Alexander

(57) **Abstract**

A network management method running on a network management device (200) is used to determine a device configuration of a network device (120-122) . The network management method includes obtaining a model name and a firmware version of the network device according to a plurality of network protocols (A-C) ; obtaining or generating a device profile according to the model name and the firmware version; and generating or updating the device configuration of the network device according to the device profile. The step of generating the device profile according to the model name and the firmware version further comprises determining at least one probing control item (F1-F8) of the network device according to the device profile; and probing an access interface of the at least one probing control item according to the plurality of network protocols respectively to update the device profile.

## Description

### Field of the Invention

The present invention relates to a network management method and a network management device, and more particularly, to a network management method and a network management device capable of utilizing multiple network protocols and automatically generating device configurations of network devices.

### Background of the Invention

In general, network management software is used to manage and monitor the operation of network devices. Through the network management software, network administrators can collect hardware information of network devices, configure, operate and manage network devices, monitor the performance and operation of network devices, set alarms, view network topology, etc., so as to control over the current status of the managed network and timely detect abnormal events therein.

However, the current network management software needs to create a dedicated device profile for each different device to understand the access methods of different devices before performing management, which is a cumbersome and complicated process. Moreover, once the network device is updated, it is necessary to create a new device profile if there is any change in the interface or functionality, which is inconvenient. In addition, the current network management software generally only supports a single interface for network configuration. For example, it may only support one of manufacturer-defined proprietary protocols, Simple Network Management Protocol (SNMP), Network Configuration Protocol (NETCONF) or Representational State Transfer (RESTful) . In this situation, when applied to some specific fields, a single network management software is incapable of supporting configuration and operation of all the control items required by the network device. As a result, a single network device may be managed by multiple different network management software at the same time, or multiple sets of network management software are needed to control all the network devices in a single field, which increases the complexity and inconvenience of network management. Therefore, there is a pressing need to improve the current network management technology.

### Summary of the Invention

Therefore, the present invention aims to provide a network management method and a network management device for automatically probing a network device to determine the access interface of each network control item and thereby automatically generating a device configuration of the network device.

This is achieved by a network management method according to the independent claim 1 or by a network management device according to the independent claim 2 here below. The dependent claims pertain to corresponding further developments and improvements.

As will be seen more clearly from the detailed description following below, a network management method is disclosed herein. The network management method, which runs on a network management device to determine a device configuration of a network device, includes obtaining a model name and a firmware version of the network device according to a plurality of network protocols; obtaining or generating a device profile according to the model name and the firmware version; and generating or updating the device configuration of the network device according to the device profile. The step of generating the device profile according to the model name and the firmware version further includes determining at least one probing control item of the network device according to the device profile; and probing an access interface of the at least one probing control item according to the plurality of network protocols respectively to update the device profile.

In another aspect of the invention, a claimed network management device is disclosed in the detailed description here below. The network management device includes a processing unit and a storage unit. The processing unit is configured to execute a program code. The storage unit is coupled to the processing unit and configured to store the program code to instruct the processing unit to execute a network management method. The network management method includes obtaining a model name and a firmware version of the network device according to a plurality of network protocols; obtaining or generating a device profile according to the model name and the firmware version; and generating or updating the device configuration of the network device according to the device profile. The step of generating the device profile according to the model name and the firmware version further includes determining at least one probing control item of the network device according to the device profile; and probing an access interface of the at least one probing control item according to the plurality of network protocols respectively to update the device profile.

### Brief Description of the Drawings

FIG. 1 is a schematic diagram of a network system.
FIG. 2 is a schematic diagram of a network system according to an embodiment of the present invention.
FIG. 3 is a flowchart of a network management process according to an embodiment of the present invention.
FIG. 4 is a flowchart of a network management process according to an embodiment of the present invention.
FIG. 5 is a schematic diagram of a device according to an embodiment of the present invention.

### Detailed Description

Certain terms are used throughout the description and following claims to refer to particular components. As one skilled in the art will appreciate, hardware manufacturers may refer to a component by different names. This document does not intend to distinguish between components that differ in name but not function. In the following description and in the claims, the terms "include" and "comprise" are utilized in an open-ended fashion, and thus should be interpreted to mean "include, but not limited to".

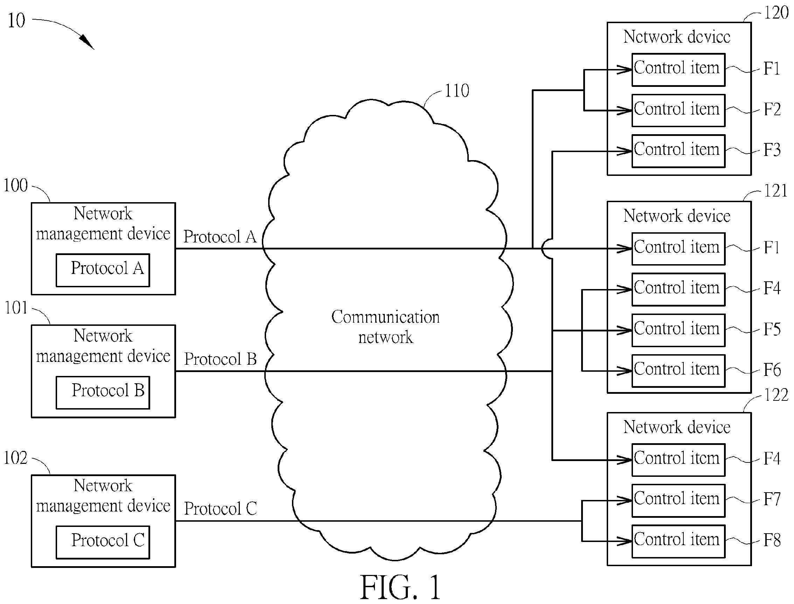

Please refer to FIG. 1, which is a schematic diagram of a network system 10. The network system 10 comprises a plurality of network management devices 100-102 and a plurality of network devices 120-122, and the network management devices 100-102 are connected to the network devices 120-122 via a communication network 110 for communication. The network devices 120-122 may be network connection devices such as switches, routers, bridges, gateways, or terminal devices such as servers or workstations, and are not limited thereto. The communication network 110 may be a local area network (LAN), a metropolitan area network (MAN), or a wide area network (WAN), and is not limited thereto. The network management devices 100-102 may be devices used to manage and monitor the network devices 120-122 or the communication network 110, and perform management functions such as configuration, operation, and monitoring (hereinafter referred to as management) to the network devices 120-122 through the communication network 110.

In general, the conventional network management devices may only support network management with a single control interface, such as only supporting SNMP, only supporting NETCONF, or only supporting custom proprietary protocols. In this situation, when the communication system 10 is a network environment that applies to a specific field or combines multiple application fields, a single network management device is unable to support the management to requisite control items of all the network devices 120-122. As shown in FIG. 1, some control items F1 and F2 of the network device 120 should be managed through the network management device 100 that supports a protocol A, while another part of the control items F3 should be managed through the network management device 101 that supports a protocol B. Similarly, some control items F1 of the network device 121 should be managed through the network management device 100 that supports the protocol A, while another part of the control items F4-F6 should be managed through the network management device 101 that supports the protocol B. Some control items F4 of the network device 122 should be managed through the network management device 101 that supports the protocol B, while another part of the control items F7-F8 should be managed through the network management device 102 that supports a protocol C. From another perspective, the network management device 100 supporting the single protocol A is able to manages only the network devices 120 and 121, the network management device 101 supporting the single protocol B is able to manage only some control items of the network devices 120-122, and the network management device 102 supporting the single protocol C is able to manage only the network device 122. In this situation, multiple network management devices are necessary for the management of the network system 10, resulting in highly complexity to manage.

In addition, in general, before using a network management device to manage a network device, a device profile corresponding to the network device must be well-prepared, so as to generate a device configuration needed by the network device for management. However, there are many types of network devices, which are variously in types, brands, models, and so on. Thus, the network management devices have to prepare different dedicated device profiles for different types, brands, and models in order to manage various network devices of various types, brands and models through the dedicated device profiles . Each time a new network device is introduced to the network management device, the technician has to build a device profile of the network device according to the designated format and parameters of the network management device. Taking FIG. 1 as an example, the network management device 100 needs to have device profiles corresponding to the network devices 120 and 121 respectively so as to manage the network devices 120 and 121. Moreover, once a network device has a firmware version update, the device profile thereof in the network management device also has to be updated simultaneously for following utilization. For example, if the firmware version of the network device 120 is updated, the device profiles corresponding to the network device 120 in the network management devices 100 and 101 also need to be updated simultaneously. In other words, since network devices of the same model and different firmware versions may provide different setting methods or interfaces, the same network device requires different device profiles in different network management devices according to different firmware versions. On the other hand, when a network management device is updated, all related device profiles may have to be updated accordingly. For example, when the network management device 101 is updated (such as adding new supported control items, adjusting access methods, etc.), the device profiles corresponding to the managed network devices 120-122 need to be readjusted for following utilization. This process often requires technicians to adjust settings one by one, which is cumbersome and complicated.

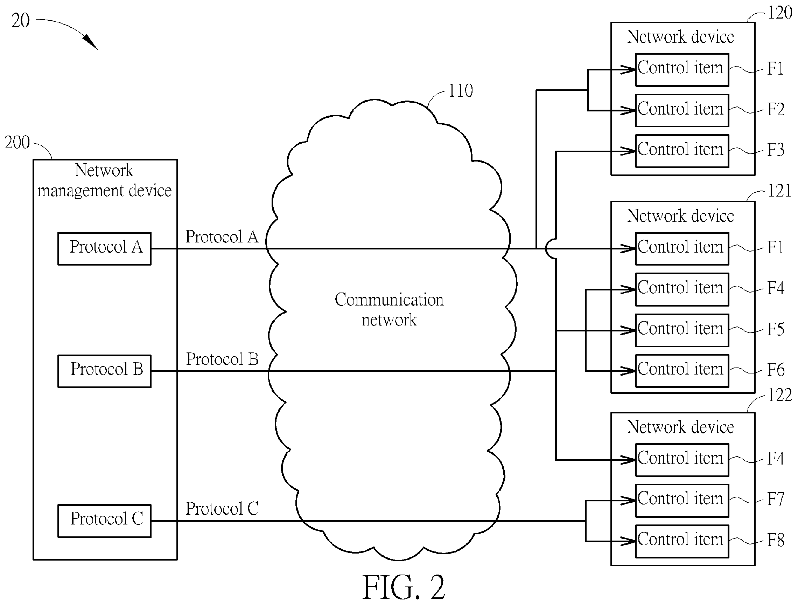

In order to solve the above issues, the present invention provides a network management device and method, which automatically detects the access interfaces of various control items of network devices to thereby manage network devices through multiple network protocols, reducing the complexity of network management and the burden on technicians. In detail, please refer to FIG. 2, which is a schematic diagram of a network system 20 according to an embodiment of the present invention. The network system 20 comprises a network management device 200 and the plurality of network devices 120-122, and the network management device 200 is connected to the network devices 120-122 via the communication network 110 for communication. The network management device 200 is able to support the protocols A to C for network management at the same time, so that monitoring and management of all the network devices 120-122 and the communication network 110 are performed only by a single network management device.

In the embodiment, the network management device 200 automatically probes to obtain the available network protocols for accessing the various control items of the network device. For example, the network management device 200 may respectively probe the access interfaces of all the control items F1 to F3 of the network device 120 according to the protocols A to C, so as to obtain the information that the control items F1 and F2 can be managed through the protocol A and the control item F3 can be managed through the protocol B. Similarly, the network management device may also obtain the information that the control items F1 of the network device 121 can be managed through the protocol A, the control items F4 to F6 can be managed through the protocol B, the control items F4 of the network device 122 can be managed through the protocol B, and the control items F7 and F8 can be managed through the protocol C. As shown in FIG. 2, according to the information obtained by auto-probing, the network management device 200 is able to manage the control items F1 and F2 of the network device 120 and the control item F1 of the network device 121 through the protocol A, manage the control items F3 of the network device 120, the control items F4 to F6 of the network device 121 and the control item F4 through the protocol B, and manage the control items F7 and F8 of the network device 122 through the protocol C. Accordingly, the cumbersome process of creating or updating the device profiles may be avoided, as well as the need to use multiple network management devices with different network protocols at the same time.

It should be noted, in FIG. 2, the number of network protocols supported by the network management device 200, the number of network devices managed by the network management device 200, and the number of control items contained in the network devices 120-122 are for illustrative purposes. The network management device 200 of the embodiment of the present invention may be suitable for any number of network protocols and for managing any number of network devices, the network devices 120 to 122 may comprise any number of control items, and are not limited thereto. In the embodiment, the protocols A to C may be, but are not limited to, SNMP protocols based on different MIBs (Management Information Bases), standard or private SNMP protocols, NETCONF protocols based on different YANG (Yet Another Next Generation) models, different RESTful API (Application Programming Interface), proprietary protocols, etc. The control items F1 to F8 of the network devices 120-122 may be network function of the network devices 120-122, which may be and are not limited to obtaining the model name of a network device, interface information, IP configure, VLAN (Virtual Local Area Network) configuration, PTP (Precise Time Protocol) configure, etc.

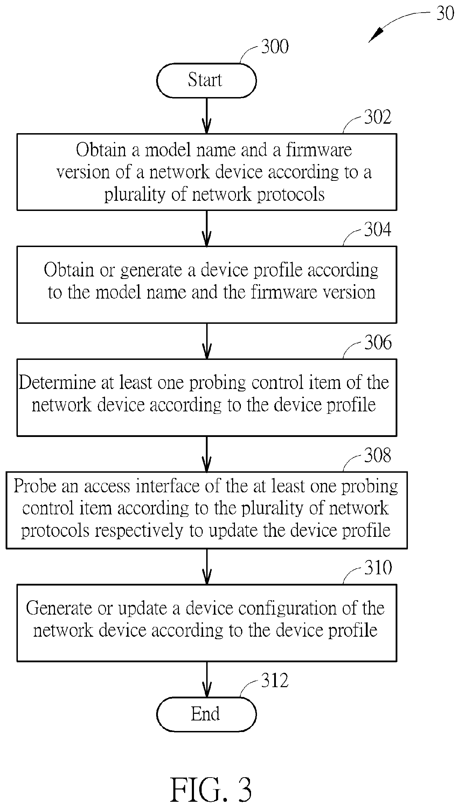

The network management method of the embodiment of the present invention may be summarized into a process 30 as shown in FIG. 3. The process 30 comprises following steps:
Step 300: Start.
Step 302: Obtain a model name and a firmware version of a network device according to a plurality of network protocols.
Step 304: Obtain or generate a device profile according to the model name and the firmware version.
Step 306: Determine at least one probing control item of the network device according to the device profile.
Step 308: Probe an access interface of the at least one probing control item according to the plurality of network protocols respectively to update the device profile.
Step 310: Generate or update a device configuration of the network device according to the device profile.
Step 312: End.

According to the process 30, the network management device 200 obtains a model name and a firmware version of a network device according to a plurality of network protocols (Step 302), and queries a database of the network management device 200 to obtain or generate a device profile according to the obtained model name and the firmware version (Step 304) . Next, the network management device 200 determines at least one probing control item of the network device according to the device profile obtained or generated in Step 304 (Step 306), and probes the access interface of the at least one probing control item based on the plurality of network protocols supported by the network management device 200 respectively, so as to update the device profile based on the probing results (Step 308) . Finally, the network management device 200 generates or updates a device configuration of the network device according to the device profile for management (Step 310) . Accordingly, the network management device 200 is capable of automatically probing the network device, eliminating the cumbersome process of manually creating the device profiles.

In Step 302, the network management device 200 obtains a model name and a firmware version of a network device according to a plurality of network protocols. The network management device 200 needs to first obtain connection information related to the network device, including the IP address of the network device and the specific information required for connection of the plurality of network protocols. For example, when using SNMP protocol, the connection information comprises public/private community strings; when using NETCONF protocol or RESTful, the connection information needs to comprise accounts and passwords. The network management device 200 connects to the network device based on the different network protocols and corresponding connection information until the model number and the firmware version of the network device are successfully obtained.

Specifically, the network management device 200 first obtains the model name and the firmware version of the network device according to a first protocol of the plurality of network protocols supported by the network management device 200. When the network device is an unidentified device (i.e., there is no associated access record of the device in the network management device 200), the first protocol is a default network protocol such as the commonly used SNMP MIB-2, but is not limited thereto. When the network device is an identified device (i.e., a device that has been managed by the network management device 200), the first protocol is the default network protocol or obtained from the device configuration of the network device by the network management device 200. When the model name and the firmware version of the network device cannot be obtained through the first protocol, the network management device 200 may obtain the model name and the firmware version of the network device based on one of the supported plurality of network protocols in sequence such as a second protocol, a third protocol, ..., until the model name and the firmware version of the network device are successfully obtained or until all the network protocols have been tried.

It should be noted, in the embodiment, the scenario that the network management device 200 cannot successfully connect to the network device through all supported network protocols and connection information may occur. In this situation, when the network device is an unidentified device, the network management device 200 records the network device as an unreachable device and end the process; when the network device is an identified device, the network management device 200 retains and inactivates all functions (control items) in the device configuration and ends the process. In addition, in the case where the network device is an identified device, if the obtained model name is different from the model name recorded in the device configuration, the network management device 200 may inactivate all functions in the device configuration and end the process. Accordingly, the network management device 200 may eliminate abnormal conditions.

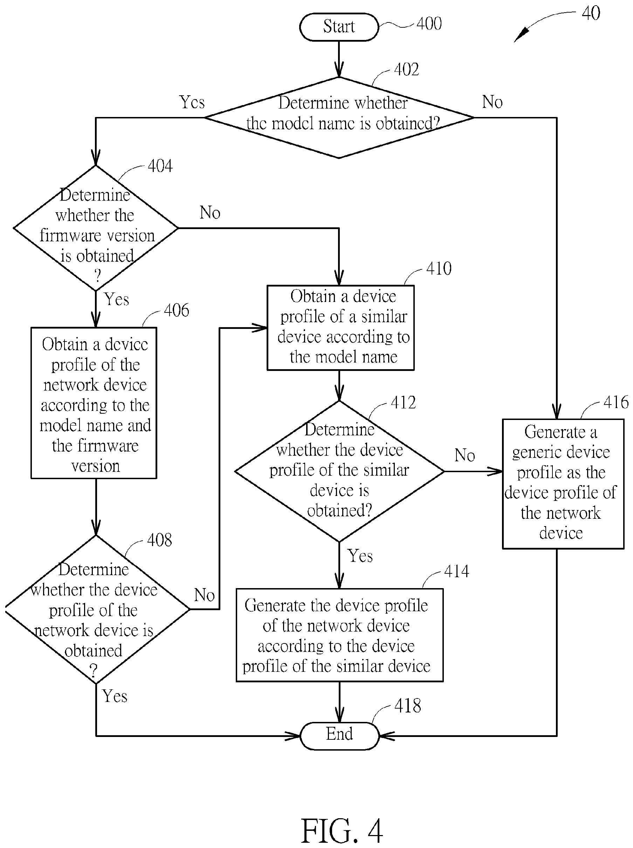

In Step 304, the network management device 200 obtains or generates a device profile according to the model name and the firmware version obtained in Step 302. Specifically, please refer to FIG. 4, which is a process 40 of obtaining or generating the device profile according to the model name and the firmware version in Step 304. The process 40 comprises the following steps:
Step 400: Start.
Step 402: Determine whether the model name is obtained. If yes, proceed to Step 404; otherwise, proceed to Step 416.
Step 404: Determine whether the firmware version is obtained. If yes, proceed to Step 406; otherwise, proceed to Step 410.
Step 406: Obtain a device profile of the network device according to the model name and the firmware version, and proceed to Step 408.
Step 408: Determine whether the device profile of the network device is obtained. If yes, proceed to Step 418; otherwise, proceed to Step 410.
Step 410: Obtain a device profile of a similar device according to the model name, and proceed to Step 412.
Step 412: Determine whether the device profile of the similar device is obtained. If yes, proceed to Step 414; otherwise, proceed to Step 416.
Step 414: Generate the device profile of the network device according to the device profile of the similar device.
Step 416: Generate a generic device profile as the device profile of the network device.
Step 418: End.

According to the process 40, the network management device 200 obtains the device profile of the network device according to the model name and the firmware version of the network device. As shown in FIG. 4, the network management device 200 first determines whether the model name is obtained (Step 402). In the case where the model name of the network device has not been successfully obtained, the network management device 200 generates a generic device profile as the device profile for the network device. The generic device profile comprises the general control items that the access interfaces are required to be probed by default, and all probe results are set as empty by default (Step 416). In the case where the model name of the network device has been successfully obtained, the network management device 200 further determines whether the firmware version of the network device is obtained (Step 404). If the model name and the firmware version of the network device are both obtained successfully, the network management device 200 queries the database of the network management device 200 according to the model name and the firmware version, so as to obtain a device profile with the same model name and firmware version as the network device (Step 406). Next, the network management device 200 determines whether the device profile with the same model name and firmware version as the network device is successfully obtained (Step 408). When the device profile with the same model name and firmware version as the network device cannot be successfully obtained, or when only the model name of the network device is obtained but the firmware version is not obtained in Step 404, the network management device 200 further queries the database only based on the model name of the network device to obtain a device profile for a similar device (Step 410) . Next, the network management device 200 determines whether the device profile of the similar device is successfully obtained (Step 412). In the case where the device profile of the similar device is successfully obtained, the network management device 200 generates the device profile of the network device according to the device profile of the similar device (Step 414). In the case where the device profile of the similar device is not successfully obtained, the network management device 200 generates a generic device profile as the device profile for the network device (Step 416).

In brief, if a device profile whose model name and firmware version are consistent with the network device is not found in the database of the network management device 200, the network management device 200 searches for the device profile of a similar device according to the model name instead, where the similar device has the same or similar model name as the network device. In general, the similar devices with the same model number and different firmware versions as the network device should have some similar control items and corresponding access interfaces as the network device. Similarly, the similar devices with similar model name to the network devices may be produced by the same manufacturer as the network device and generally have some similar control items and corresponding access interfaces. Therefore, in the embodiment of the present invention, the network management device 200 generates the device profile of the network device according to the device profile of the similar device. Accordingly, the number of control items to be probed may be reduced. On the other hand, in the case where the model name of the network device or the device profile of the similar device cannot be obtained, the network management device 200 uses the generic device profile as the device profile for the network device and will probe the access interface of all control items.

After obtaining the device profile in Step 304 according to the process 40, the network management device 200 further determines at least one probing control item of the network device according to the device profile in Step 306. In the embodiment, the device profile records network protocols supportable to access interfaces of each control item of the network device with the model name and the firmware version. According to the records in the device profile, the network management device 200 determines the at least one probing control item to be the all control items without supportable network protocols recorded. It should be noted, if the device profile is obtained in Step 406, i.e., the model name and the firmware version corresponding to the obtained device profile are consistent with the network device, it indicates that the network management device 200 has identified a network device with the same model name and the same firmware version and has saved the device profile thereof. In this situation, the access interface used by each control item in the device profile is known, that is to say, there are no control items needed to be probed in the device profile. Therefore, the network management device 200 may omit Steps 306 to 308 and proceed to Step 310 directly to generate the device configuration of the network device.

In Step 308, the network management device 200 probes an access interface of the at least one probing control item according to the plurality of network protocols respectively so as to update the device profile. Note that, if the device profile of the network device is generated according to the generic device profile in Step 416, all the control items therein are set to have no supported network protocols by default. In this situation, the network management device 200 determines the at least one probing control items to be the all control items. In other words, the network management device 200 has to probe all the control items by using all network protocols supported by the network management device 200 separately.

At last, in Step 310, the network management device 200 generates or updates the device configuration of the network device according to the device profile. Accordingly, the network management device 200 is able to manage the network device.

In current network management software, the device profiles are usually developed and designed from the perspective of the network devices. Therefore, when introducing new network devices into the network management software or facing updates of the network devices or network management software, the device profiles need to be re-developed or modified by technicians, which makes network management inflexible. In comparison, in the embodiment of the present invention, the device profiles are developed and designed from the perspective of various control items (functions) of the network devices. Therefore, through database queries, it is possible to use known information to avoid repeated probing to the known control items. In addition, generating device profiles through automatically probing according to multiple network protocols allows the network management device to be adapted to the management of any kind of network devices. Accordingly, the present invention improves the drawback of the conventional method, which requires a well-prepared device profile before managing a network device.

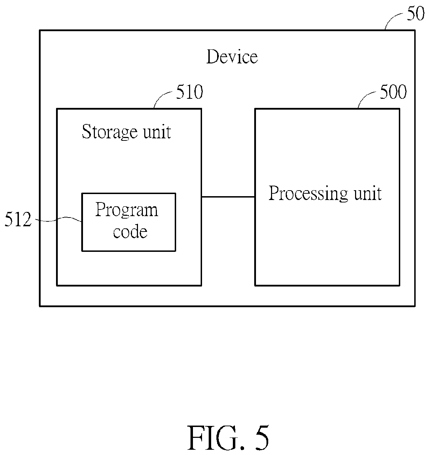

Furthermore, please refer to FIG. 5, which is a schematic diagram of a device 50 according to an embodiment of the present invention. The device 50 is used to implement the network management device 200. As shown in FIG. 5, the device 50 may comprise a processing unit 500 and a storage unit 510. The processing unit 500 may be a general-purpose processor, a microprocessor, an application-specific integrated circuit (ASIC) or the combination thereof. The storage unit 510 may be any type of data storage devices for storing a program code 512, and the program code 512 is read and executed by the processing unit 500. For example, the storage unit 510 may be a read-only memory (ROM), a flash memory, a random-access memory (RAM), a hard disk, an optical data storage device, a non-volatile storage unit, etc., and is not limited thereto.

The device 50 is used to represent the necessary components required to implement the embodiments of the present invention, and those skilled in the art may make various modifications and adjustments accordingly, and is not limited thereto. For example, when the device 50 is applied to implement the network management device 200, the process 30 and the process 40 of network management may be complied into the program code 512, stored in the storage unit 510, and executed by the processing unit 500. Moreover, the storage unit 510 is also used to implement a database that stores device profiles corresponding to various model names and firmware versions, as well as to store the device configuration of each network device and data required for running the network management method, and is not limited thereto.

In summary, the present invention provides a network management device and a network management method capable of performing management through multiple different network protocols . In addition, through probing access interfaces of control items for the network devices, the network protocol applicable to each control item is automatically determined, thereby lowering the technical threshold for introducing new device into network management and eliminating the labor burden caused by device updates in the prior art.

## Claims

1. A network management method running on a network management device (200), used to determine a device configuration of a network device (120-122), the network management method **characterized by** comprising:
obtaining a model name and a firmware version of the network device (120-122) according to a plurality of network protocols (A-C);
obtaining or generating a device profile according to the model name and the firmware version; and
generating or updating the device configuration of the network device (120-122) according to the device profile;
wherein the step of generating the device profile according to the model name and the firmware version further comprises:
determining at least one probing control item (F1-F8) of the network device (120-122) according to the device profile; and
probing an access interface of the at least one probing control item (F1-F8) according to the plurality of network protocols (A-C) respectively to update the device profile.

2. A network management device (200), used to determine a device configuration of a network device (120-122), **characterized by** comprising:
a processing unit (500), configured to execute a program code (512); and
a storage unit (510), coupled to the processing unit (500), configured to store the program code (512) to instruct the processing unit (500) to execute a network management method, wherein the network management method comprises:
obtaining a model name and a firmware version of the network device (120-122) according to a plurality of network protocols (A-C);
obtaining or generating a device profile according to the model name and the firmware version; and
generating or updating the device configuration of the network device (120-122) according to the device profile;
wherein the step of generating the device profile according to the model name and the firmware version further comprises:
determining at least one probing control item (F1-F8) of the network device (120-122) according to the device profile; and
probing an access interface of the at least one probing control item (F1-F8) according to the plurality of network protocols (A-C) respectively to update the device profile.

3. The network management method of claim 1 or the network management device (200) of claim 2, **characterized in that** the step of obtaining the model name and the firmware version of the network device (120-122) is obtaining the model name and the firmware version of the network device (120-122) according to a first protocol of the plurality of network protocols (A-C).

4. The network management method or the network management device (200) of claim 3, **characterized in that** when the network device (120-122) is an unidentified device, the first protocol is a default network protocol of the plurality of network protocols (A-C).

5. The network management method or the network management device (200) of claim 3, **characterized in that** when the network device (120-122) is an identified device, the first protocol is determined according to the device configuration of the network device (120-122).

6. The network management method or the network management device (200) of claim 3, further **characterized by** comprising:
in response to not obtaining the model name and the firmware version of the network device (120-122) according to the first protocol of the plurality of network protocols (A-C), obtaining the model name and the firmware version of the network device (120-122) according to a second protocol of the plurality of network protocols (A-C).

7. The network management method of claim 1 or the network management device (200) of claim 2, further **characterized by** comprising:
in response to not obtaining the model name of the network device (120-122), generating a generic device profile as the device profile and determining the at least one probing control item (F1-F8) to be all default control items in the step of obtaining or generating the device profile according to the model name and the firmware version.

8. The network management method of claim 1 or the network management device (200) of claim 2, **characterized in that** the step of obtaining or generating the device profile according to the model name and the firmware version comprises querying a database of the network management device (200) according to the model name and the firmware version so as to obtain the device profile with the same model name and firmware version as the network device (120-122).

9. The network management method or the network management device (200) of claim 8, further **characterized by** comprising:
in response to not obtaining the device profile with the same model name and firmware version as the network device (120-122), querying the data base according to the model name so as to obtain a device profile of a similar device and generate the device profile according to the device profile of the similar device, wherein the similar device has the same or similar model name as the network device (120-122).

10. The network management method or the network management device (200) of claim 9, further **characterized by** comprising:
in response to not obtaining the device profile of the similar device, generating a generic device profile as the device profile and determining the at least one probing control item (F1-F8) to be all default control items according to the generic device profile.

11. The network management method of claim 1 or the network management device (200) of claim 2, **characterized in that** the device profile records network protocols supportable to access interfaces of each control item of the network device with the model name and the firmware version.

12. The network management method or the network management device (200) of claim 11, **characterized in that** in the step of determining the at least one probing control item (F1-F8) of the network device (120-122) according to the device profile, the at least one probing control item (F1-F8) comprises control items without supportable network protocols (A-C) recorded in the device profile.
